# FASCICULE DE BREVET EUROPEEN

(11) **EP 1 319 936 B1**
(45) Date de publication et mention de la délivrance du brevet: **03.11.2010**
(21) Numéro de dépôt: 02293048.1
(22) Date de dépôt: 10.12.2002
(51) Int. Cl.: G01L 19/12, G01L 9/14, H01H 35/24

(54) **Détecteur de pression**
Druckdetektor
Pressure detector

(30) Priorité: 12.12.2001 FR 0116035
(43) Date de publication de la demande: 18.06.2003
(73) Titulaire: IN-LHC, 28200 Chateaudun (FR)
(72) Inventeur: Privat. Joel, 28200 Chateaudun (FR)
(74) Mandataire: Robert, Jean-Pierre

(56) Documents cités:
- EP-A- 0 642 146
- EP-A- 0 884 572
- EP-A- 1 137 029
- WO-A-82/01068
- US-A- 3 350 523
- US-A- 4 174 564
- US-A- 4 519 256
- US-B1- 6 255 609

## Description

L'invention a pour objet un détecteur de pression, c'est-à-dire un dispositif destiné à être associé à un circuit hydraulique ou pneumatique et délivrant un signal électrique en réponse au franchissement d'un seuil de pression dans le circuit. Le plus souvent, les détecteurs de pression sont adaptés pour réagir à une différence de pression entre la pression du circuit et une pression de référence, qui peut être la pression atmosphérique ou encore la pression d'un autre circuit.

Un type connu de détecteur de pression est constitué par les manocontacts qui comportent un corps délimitant deux chambres étanches l'une par rapport à l'autre et susceptibles d'être chacune reliée à une source de fluide sous pression, un équipage mobile monté coulissant dans le corps et soumis de manière antagoniste à la pression régnant dans chacune des chambres, et un détecteur d'au moins une position de l'équipage mobile, significative d'un seuil de différence de pression entre les deux chambres et émettant un signal en réponse à cette détection.

Dans les manocontacts, le détecteur de position est un microcontacteur qui est actionné directement ou indirectement par l'équipage mobile.

Le microcontacteur est la source d'un certain nombre de problèmes. En effet, la course de l'équipage mobile est très réduite (de l'ordre de quelques dixièmes de millimètre), rendant le montage et le réglage du microcontacteur très minutieux, et donc très onéreux. En outre, les efforts internes du microcontacteur, ainsi que les efforts entre le microcontacteur et l'équipage mobile, sont difficilement contrôlables et perturbent la précision de la détection de position, particulièrement dans le cas de la mesure de basses pressions. Le microcontacteur ainsi que le poussoir sont par ailleurs susceptibles de s'user du fait des contacts et frottements lors de la manoeuvre de ces éléments, ce qui limite la durée de fonctionnement normal d'un tel détecteur de pression. Enfin, la tenue en vibration d'un microcontacteur est limitée.

L'invention vise donc à proposer un détecteur de pression sans microcontacteur. On connaît par ailleurs des capteurs de pression qui comportent un équipage mobile à l'encontre de ressorts de rappel sous l'effet d'une différence de pression entre deux chambres du capteur. L'équipage mobile porte un aimant dont les mouvements sont détectés par une cellule inductive analogique, cette dernière étant associée à un circuit électronique qui délivre une information électrique proportionnelle à la différence de pression régnant entre les deux chambres du capteur. Les ressorts de rappel sont en général choisis le plus linéaire possible afin que le déplacement de l'équipage mobile soit proportionnel à la différence de pression à mesurer. De cette façon, les seules nonlinéarités à compenser électroniquement sont les nonlinéarités inhérentes à la cellule inductive.

L'utilisation d'une telle cellule inductive évite tout contact mécanique entre l'équipage mobile et la cellule inductive, réduisant notablement l'usure, le risque de déréglage mécanique, et la perturbation de la détection due aux efforts de frottement.

Le document US-B-6 255 609 divulgue un tel capteur.

Malheureusement, un tel capteur ne peut être utilisé en l'état pour la réalisation d'un détecteur de pression.

En effet, la position de l'équipage mobile, résultant de l'équilibre entre les effets de la pression et les effets du ressort de rappel, peut varier autour de la position significative du seuil à détecter, la cellule inductive délivrant alors un signal impropre à permettre une séparation distincte des niveaux de pression inférieur ou supérieur audit seuil.

Il faudrait alors utiliser des comparateurs pour créer électroniquement un seuil de franchissement haut et un seuil de franchissement bas pour s'affranchir de ces variations, ce qui se révèle complexe.

L'invention vise à proposer un détecteur de pression de type inductif, qui ne fait pas appel à une électronique spécifique pour discriminer le seuil de détection du détecteur de pression.

A cet effet, on propose selon l'invention un détecteur de pression dans lequel l'équipage mobile est soumis à l'action d'un ressort non-linéaire rappelant l'équipage mobile vers une butée et exerçant sur l'équipage mobile un effort de rappel croissant jusqu'à une flèche critique et décroissant de la flèche critique jusqu'à une flèche maximale, la position témoin correspondant à la flèche maximale du ressort, tandis que le détecteur de position comporte un aimant permanent porté par l'équipage mobile à l'une de ses extrémités et une cellule inductive sensible au champ magnétique de l'aimant permanent portée de manière fixe par le corps en regard de l'aimant permanent et délivrant un signal pouvant prendre deux valeurs distinctes.

Ainsi, sous l'effet du différentiel de pression croissant, l'équipage mobile se déplace et comprime le ressort de rappel jusqu'à atteindre la flèche critique. Au delà, la résistance du ressort diminue brusquement, et l'équipage mobile ainsi soulagé se déplace vivement jusqu'à la position témoin de l'équipage mobile correspondant à la flèche maximale du ressort. L'équipage mobile reste alors dans cette position témoin tant que l'effort induit par le différentiel de pression est supérieur à l'effort du ressort correspondant à la flèche maximale. Lorsque l'effort descend en dessous de ce seuil, l'équipage mobile se déplace vivement dans l'autre sens, jusqu'à revenir à une course correspondant à une flèche du ressort inférieure à la flèche critique.

A la flèche critique du ressort correspond un seuil supérieur du différentiel de pression, et à la flèche maximale correspond un seuil inférieur du différentiel de pression

La position témoin est donc nettement séparée des autres positions stables par la zone de transition brusque qui s'étend sensiblement de la flèche critique à la flèche maximale. On a ainsi réalisé une discrimination spatiale très forte de la position témoin.

Or la présence de l'équipage mobile dans la position témoin est le signe indubitable que le différentiel de pression a franchi en croissant le seuil supérieur, mais n'a pas encore franchi en décroissant le seuil inférieur.

On profite de la discrimination spatiale de la position témoin pour la repérer facilement au moyen d'une cellule inductive à deux états judicieusement disposée pour que, lorsque l'équipage mobile n'est pas dans la position témoin, l'aimant permanent soit suffisamment éloigné de la cellule inductive pour que son influence sur la cellule inductive ne dépasse pas un seuil d'influence inférieur de la cellule inductive, et lorsque l'équipage mobile est dans la position témoin, l'aimant permanent soit suffisamment proche de la cellule inductive pour que son influence sur la cellule inductive dépasse un seuil d'influence supérieur de la cellule inductive.

La cellule inductive émettant un signal différent pour chacune de ces situations, on a alors réalisé un détecteur de pression capable de repérer le passage croissant d'un seuil supérieur et le passage décroissant d'un seuil inférieur, grâce à une cellule inductive d'un type très simple, et ne faisant pas appel à une électronique complexe à base de comparateurs.

Selon un mode particulier de réalisation, le détecteur de position comprend un contre-aimant associé à la cellule inductive.

On sait que la dérive de la sensibilité de la cellule inductive avec la température dépend proportionnellement de la valeur absolue du champ qui influence la cellule. Grâce à la présence du contre-aimant monté en opposition, la valeur de ce champ peut être rendue faible, voire nulle, ce qui diminue la dérive de la sensibilité de la cellule avec la température.

Par ailleurs, la présence du contre-aimant monté en opposition de l'aimant permanent de l'équipage mobile courbe et resserre les lignes de champ dudit aimant, favorisant la création d'un gradient de champ magnétique important. Les seuils d'influence de la cellule inductive correspondent dès lors à des courses qui sont resserrées, ce qui a pour effet de resserrer la plage de détection de la cellule inductive. La plage de détection est donc largement incluse dans la zone de transition.

Selon un aspect particulier de l'invention, le ressort non linéaire est réalisé dans un matériau ayant des caractéristiques élastiques sensiblement invariantes avec la température.

D'autres caractéristiques et avantages de l'invention apparaîtront plus clairement à la lumière de la description qui suit d'un mode de réalisation particulier non limitatif de l'invention. Il sera fait référence aux dessins annexés et aux figures parmi lesquelles :
- la figure 1 est une vue en coupe d'un détecteur de pression selon l'invention ;
- la figure 2 est un graphe représentant l'effort développé par les ressorts équipant le détecteur de pression de la figure 1 en fonction de la course de l'équipage mobile ;
- la figure 3 est un graphe représentant le comportement de la cellule inductive équipant le détecteur de pression de la figure 1 ;
- la figure 4 est un graphe montrant la superposition de la zone de transition de l'équipage mobile et de la plage de détection de la cellule inductive ;
- les figures 5a et 5b sont des vues symboliques illustrant l'effet du contre-aimant sur les lignes de champ de l'aimant équipant le détecteur de pression de la figure 1 ;
- les figures 6a,6b sont des vues symboliques illustrant l'effet du contre-aimant sur les performances de la cellule inductive équipant le détecteur de pression de la figure 1 ;
- la figure 7 est un graphe analogue à celui de la figure 3 illustrant les effets des variations de température sur la plage de détection.

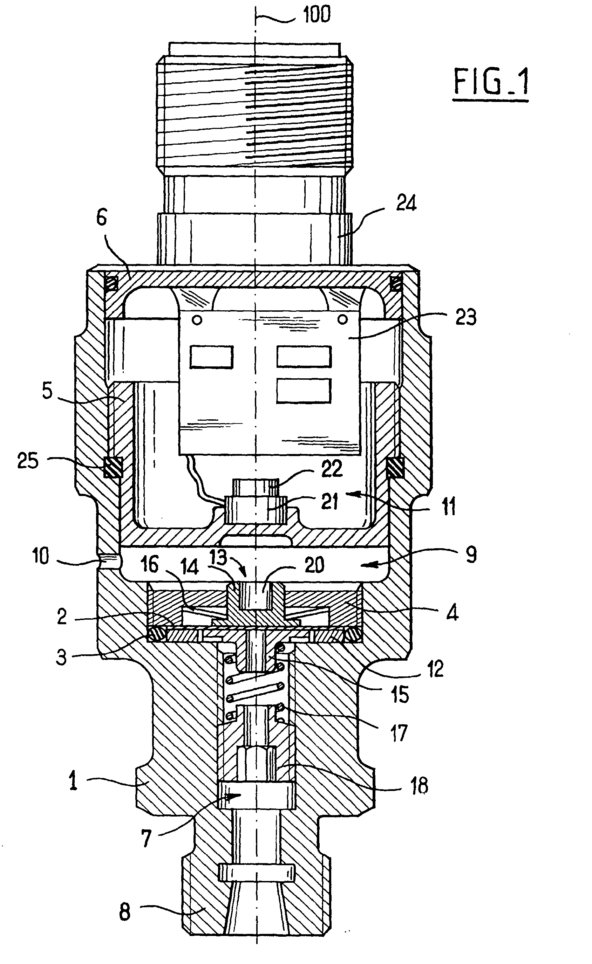

En référence à la figure 1, un détecteur de pression selon l'invention comprend un corps 1 creux sensiblement de révolution selon l'axe 100.

Le corps 1 porte une membrane souple 2 qui est pincée entre un joint torique 3 et un palier 4 vissé dans le corps 1. Le corps 1 porte par ailleurs un séparateur 5 vissé à l'intérieur du corps, ainsi qu'un couvercle 6.

Ces dispositions définissent une première chambre intérieure 7 s'étendant sous la membrane souple 2 et pouvant être reliée à un circuit hydraulique ou pneumatique non représenté par l'intermédiaire d'un embout de connexion 8, une seconde chambre 9 entre la membrane souple 2 et le séparateur 5 qui est mise à la pression atmosphérique grâce à une mise à l'air 10. La membrane souple 2 est ainsi soumise à l'action différentielle des pressions régnant dans la première et seconde chambre.

Il est facile pour l'homme du métier de modifier le corps 1 pour y adapter un second embout de connexion pour mettre en communication la seconde chambre 9 avec un autre circuit de fluide.

Le séparateur 5 et le couvercle 6 définissent quant à eux un compartiment 11 accueillant la partie électrique du détecteur de pression qui sera détaillée plus loin.

La face inférieure de la membrane souple 2 repose sur un plateau 12 qui soutient la membrane souple 2 et l'empêche de fléchir vers le bas au cas où la pression dans la chambre 7 serait inférieure à celle régnant dans la chambre 9.

Les mouvements de la membrane souple 2 sous l'effet de la pression sont utilisés pour déplacer un équipage mobile 13 composé d'un porte-aimant 14 et d'une butée 15. Lorsque la butée 15 est en contact avec le corps 1, la butée 15 soutient la membrane souple 2. Le porte-aimant 14 est monté coulissant dans le palier 4.

L'équipage mobile 13 est soumis à l'action d'un premier ressort de rappel 16 non-linéaire ayant la forme d'une coupelle qui prend appui sur le palier 4 et le porte-aimant 14, et d'un second ressort 17 hélicoïdal linéaire qui prend appui sur un siège 18 et la butée 15. Le siège 18 est solidaire du corps 1 et est réglable par vissage vis à vis de celui-ci.

L'action des deux ressorts 16,17 est antagoniste, de sorte que le porte-aimant 14 et la butée 15 sont en permanence contraints à pincer la membrane souple 2 sans pouvoir s'en décoller. Les deux parties de l'équipage mobile 13 sont ainsi solidaires de la membrane souple 2, sans qu'il y ait eu besoin de percer la membrane souple pour relier ces deux parties, ce qui permet de garantir une excellente étanchéité entre les chambres 7 et 9.

Le détecteur de pression est équipé d'un détecteur de position inductif comprenant un aimant permanent 20 fixé sur le porte-aimant 14, une cellule inductive 21 et un contre-aimant 22 fixés tous deux sur le séparateur 5 en regard de l'aimant permanent 20. La cellule inductive 21 est reliée à une carte électronique 23 qui est elle-même reliée à un connecteur électrique 24. La cellule inductive 21, le contre-aimant 22 et la carte électronique 23 sont contenus dans le compartiment 11 sont donc physiquement séparés des deux chambres 7 et 9. Si la chambre 9 est amenée à recevoir d'autres fluides que de l'air, on peut rendre la chambre 9 étanche vis à vis du compartiment 11 à l'aide d'un joint d'étanchéité non représenté placé entre le séparateur 5 et le corps 1.

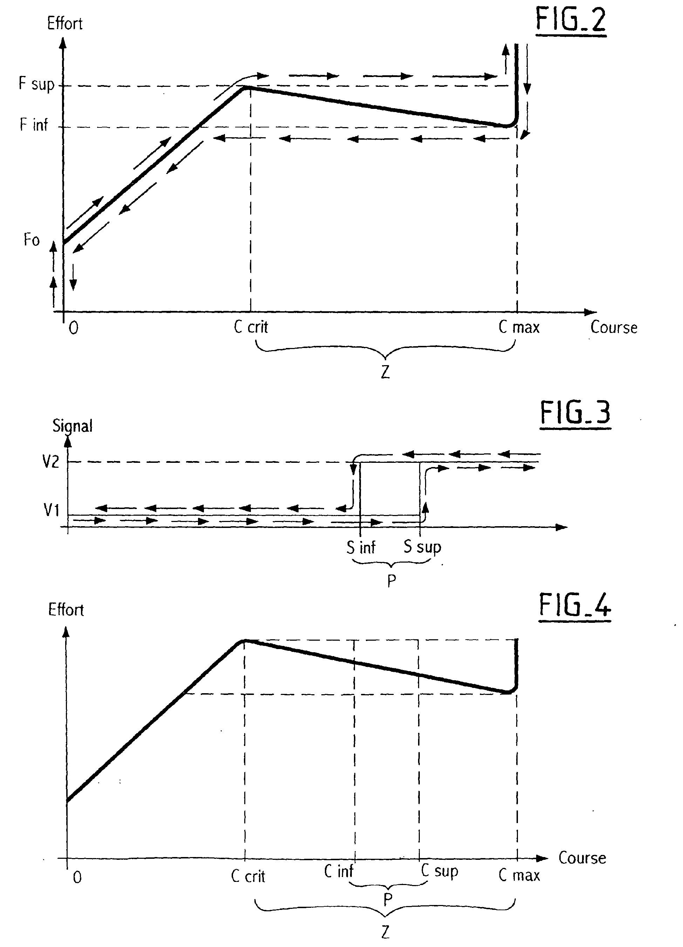

Le fonctionnement du détecteur de pression est le suivant. Du fait de la non-linéarité du ressort 16, les deux ressorts 16,17 soumettent l'équipage mobile 13 à un effort représenté à la figure 2 en traits épais.

Le déplacement de l'équipage mobile 13 suit un cycle symbolisé par les flèches. Partant d'une course nulle qui correspond à la position illustrée à la figure 1, l'équipage mobile 13 ne commence à se déplacer que si le différentiel de pression est assez important pour vaincre l'effort de seuil Fo imposé par les deux ressorts 16,17.

Puis, quand le différentiel de pression augmente, l'équipage mobile 13 se déplace pour prendre une position d'équilibre stable qui correspond à l'équilibre entre l'effort des ressorts et l'effet du différentiel de pression s'appliquant sur la membrane souple 2 et qui se trouve sur la partie croissante de la courbe d'effort.

L'effort imposé par les ressorts 16,17 croit, jusqu'à atteindre un effort Fsup correspondant à une course Ccrit de l'équipage mobile qui coïncide avec une flèche critique du ressort non-linéaire 16. Au delà de cette course, l'effort imposé par les ressorts 16,17 décroît.

L'équipage mobile 13, ainsi soulagé, se déplace brusquement jusqu'à une position correspondant à la course maximale Cmax, qui correspond elle-même à une flèche maximale du ressort 16. A partir de cette flèche, le ressort non-linéaire 16 devient très raide, et on peut considérer que l'équipage mobile 13 ne bouge pratiquement plus, quand bien même le différentiel de pression continue à augmenter.

Tant que le différentiel de pression sur la membrane souple 2 impose un effort supérieure à l'effort Finf des ressorts 16,17 correspondant à la course maximale Cmax, l'équipage mobile 13 reste dans la position témoin.

Dès que le différentiel de pression impose sur la membrane souple 2 un effort inférieur à l'effort Finf, l'équipage mobile 13 de déplace brusquement jusqu'à retrouver une position d'équilibre stable qui correspond à une course inférieure à la course critique Ccrit.

Puis, lorsque le différentiel de pression diminue, l'équipage mobile 13 revient progressivement à sa position initiale et y reste tant le différentiel de pression impose sur la membrane souple 2 un effort inférieur à l'effort initial Fo.

L'effet du ressort non linéaire 16 est donc de discriminer la position témoin correspondant à la course maximale Cmax, en la séparant nettement des autres position stables par une zone de transition Z s'étendant de la course critique Ccrit à la course maximale Cmax.

Cet effet est essentiellement dû à la non linéarité du ressort 16. Cette non-linéarité peut être facilement obtenue en donnant par exemple au ressort 16 une forme de coupelle conique.

On conçoit qu'à l'effort Fsup associé à la course critique Ccrit correspond un seuil supérieur de différentiel de pression déterminé, et qu'à l'effort Finf associé à la course maximale Cmax correspond un seuil inférieur de différentiel de pression déterminé.

La présence de l'équipage mobile 13 dans la position témoin est donc le signe indubitable du franchissement croissant par le différentiel de pression du seuil supérieur, et de l'absence de franchissement décroissant du seuil inférieur.

Le fonctionnement de la cellule inductive 21 utilisée ici est quant à lui illustré sur le graphe de la figure 3, où en abscisse est portée l'intensité du champ magnétique influençant la sonde, et en ordonnée la valeur du signal produit par la sonde en réponse au champ magnétique. Il s'agit d'une cellule inductive d'un type très simple, délivrant un signal pouvant prendre uniquement deux valeurs selon les modalités suivantes.

Si le champ magnétique influençant la cellule inductive est faible, le signal produit par la cellule inductive vaut V1. Lorsque le champ magnétique influençant la cellule inductive augmente et dépasse un seuil d'influence Ssup, le signal change brusquement de valeur pour prendre la valeur V2. Lorsque le champ magnétique décroît, et dévient inférieur à un seuil d'influence Sinf inférieur à Ssup, la valeur du signal revient à la valeur V1. Les seuils d'influence Sinf et Ssup définissent une plage de détection P, et sont susceptibles de se déplacer sous l'effet d'une variation de température.

Dans l'application illustrée ici, le champ magnétique influençant la cellule inductive 21 est celui de l'aimant permanent 20, tandis que les variations dudit champ magnétique sont dues au déplacement de l'équipage mobile 13 et donc de l'aimant permanent 20 sous l'effet de la pression. On peut donc établir une correspondance entre une course déterminée de l'équipage mobile Cinf et le seuil d'influence inférieur Sinf, ainsi qu'entre une course déterminée de l'équipage mobile Csup et le seuil d'influence supérieur Ssup. De façon équivalente, la plage de détection P désignera l'intervalle de course entre Cinf et Csup.

Reportant ces deux courses Cinf et Csup sur la courbe d'effort comme cela est illustré à la figure 4, on constate alors que l'on a disposé la cellule inductive 20 par rapport à l'équipage mobile 13 de sorte que la plage de détection P se trouve incluse, et sensiblement au centre de la zone de transition Z.

De cette façon, on s'assure que lorsque l'équipage mobile 13 est dans la position témoin, la proximité de l'aimant permanent 20 de la cellule inductive 21 assure une influence sur cette dernière qui dépasse le seuil d'influence Ssup et provoque donc de la part de celle-ci l'émission d'un signal de valeur V2, tandis que lorsque l'équipage mobile n'est plus dans la position témoin et se trouve hors de la zone de transition Z, l'aimant permanent 20 soit suffisamment éloigné de la cellule inductive 21 pour que l'influence de l'aimant soit inférieure au seuil d'influence Sinf et donc que la cellule inductive 21 émette un signal de valeur V1.

On a ainsi réalisé un détecteur de pression simple, sans pour autant recourir à une électronique complexe à base de comparateurs, pour discriminer des seuils de pression. L'électronique portée par la carte 23 pourra alors être réduite à une simple protection (par exemple par diodes) de la cellule inductive 21.

On remarquera que le déplacement du siège 18 a pour effet de modifier la précontrainte du ressort 17, et donc de décaler la courbe d'effort vers le haut ou vers le bas sur la figure 2, ce qui permet de régler la sensibilité du détecteur de pression en modifiant les seuils de différentiel de pression supérieur et inférieur.

Afin de positionner finement la plage de détection P par rapport à la zone de transition Z de l'équipage mobile, le séparateur 5 est vissable dans le corps, et sa position axiale, et donc l'éloignement relatif de la cellule inductive 21 de l'aimant permanent 20 peut être définie par une cale de réglage 25.

Le séparateur 5 est de préférence réalisé dans un matériau amagnétique, pour éviter la perturbation de la cellule inductive 21.

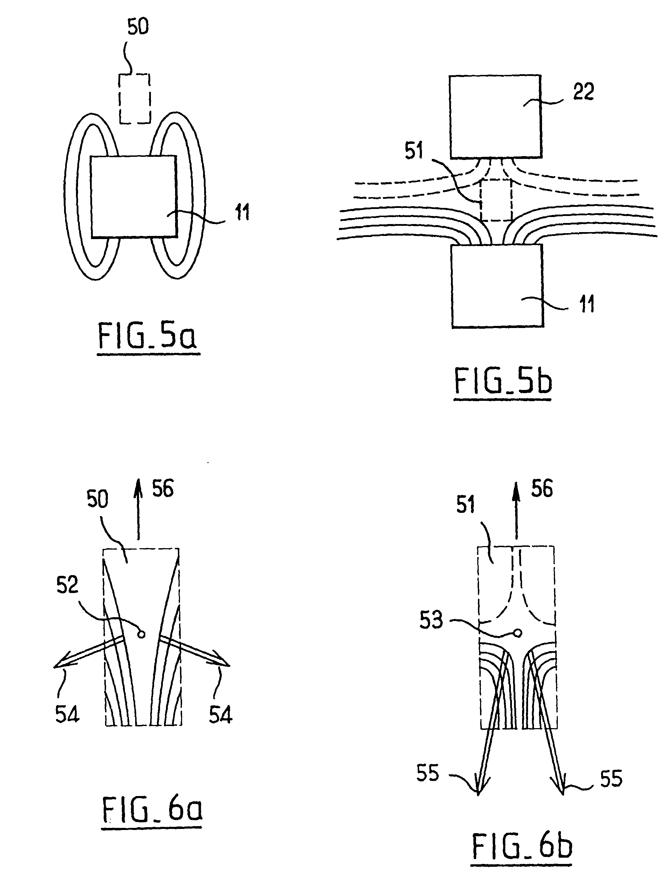

Sur les figures 5a et 5b, on a illustré l'effet du contre-aimant 22 sur les lignes de champs de l'aimant permanent 20. Par comparaison de la figure 5a à la figure 5b, on constate que la présence du contre-aimant 22 monté en opposition courbe et resserre les lignes de champ de l'aimant permanent 20.

L'effet sur la détection est illustré par les agrandissements des zones 50 et 51 présentées dans les figures 6a et 6b, qui expliquent de manière symbolique le principe de la détection et l'avantage qu'apporte la présence du contre-aimant 22.

En figure 6a, la cellule inductive est sensible au champ régnant dans une zone d'influence centrée sensiblement sur un point 52 fixe.

Si l'équipage mobile 13 se déplace dans le sens indiqué 56, c'est à dire tendant à rapprocher l'aimant permanent 20 de la cellule inductive 21, l'ensemble des lignes de champ crée par l'aimant permanent 20 se déplace en bloc avec l'équipage mobile 13. La valeur du champ au point 52 ne va pas beaucoup varier, étant donné que le gradient des lignes de champs est orienté selon les directions 54, soit sensiblement perpendiculaire au sens de déplacement 56. Les seuils d'influence Ssup et Sinf de la cellule inductive 21 vont alors correspondre à des courses Csup et Cinf qui sont écartées. La plage de détection P sera donc étendue, et lors des déplacements de cette plage de détection avec la température, celle-ci peut ne plus être incluse entièrement dans la zone de transition Z de l'équipage mobile 13.

En figure 6b, les lignes de champ de l'aimant permanent 20 subissent l'influence du contre-aimant 22, et sont donc recourbées et resserrées.

De la même façon que précédemment, la cellule inductive 21 est sensible au champ magnétique régnant dans une zone d'influence centrée sur le point 53 fixe.

Si on déplace l'équipage mobile dans le sens 56, l'aimant permanent 20 va se rapprocher du contre-aimant 22, et les lignes de champ vont se resserrer davantage. Le champ au point 53 va varier très vite lors de ce déplacement, du fait que le gradient des lignes de champ est orienté selon la direction 55 sensiblement parallèle à la direction du déplacement 56. Les seuils de détection Ssup et Sinf vont maintenant correspondre à des courses Csup et Cinf qui seront rapprochées. La plage de détection P aura alors une petite amplitude qui sera largement contenue dans la zone de transition Z de l'équipage mobile 13

Grâce au contre-aimant, on peut donc réaliser des détecteurs de pression très précis avec des cellules inductives bon marché.

Ces dispositions permettent de réaliser un détecteur de pression quasiment insensible aux variations de température. En effet, il est connu que les seuils d'influence Ssup et Sinf de la cellule inductive 21 se déplacent d'une quantité qui est proportionnelle à la variation de température ainsi qu'à la valeur absolue du champ magnétique qui influence la cellule inductive 21. Grâce à l'utilisation du contre-aimant 22, le champ magnétique influençant la cellule inductive a une valeur proche de zéro. Le déplacement des seuils de détection Ssup et Sinf et donc des courses correspondantes Csup et Cinf de la cellule inductive 21 avec la température reste donc très faible.

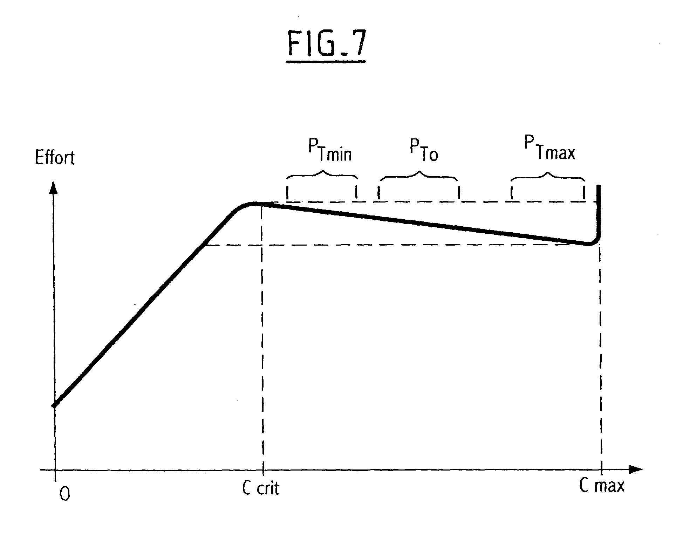

On a illustré le déplacement de la plage de détection P de la cellule inductive 21 à la figure 7. La position centrale de la plage de détection P correspond à une température moyenne To. On a également illustré la position de la plage de détection P pour des températures minimale Tmin et maximale Tmax délimitant la plage de température de fonctionnement du détecteur de pression. On constate donc que le déplacement résiduel de la plage de détection avec la température ne fait pas sortir la plage de détection P de la zone de transition Z, ce qui permet de garantir la détection de la position témoin dans toute la plage de température pour laquelle le détecteur de pression est censé fonctionner.

Pour éviter alors le déplacement avec la température des seuils de différentiel de pression supérieur et inférieur, le ressort 16 (et, au besoin, le ressort 17) est de préférence réalisé dans un matériau dont les caractéristiques élastiques sont sensiblement invariantes avec la température. De tels matériaux sont bien connus, et on peut par exemple citer les alliages ferronickel DURINVAL ou ELINVAR des Aciéries d'IMPHY.

Ces dispositions permettent de proposer un détecteur de pression ne comportant pas d'électronique de compensation des effets de la variation de température.

L'invention n'est pas limitée au mode particulier de réalisation qui vient d'être décrit, mais bien au contraire entend couvrir toute variante qui entre dans le cadre de l'invention tel que défini par les revendications.

## Revendications

1. Détecteur de pression comportant un corps (1) délimitant deux chambres (7,9) étanches l'une par rapport à l'autre, et susceptibles d'être chacune reliée à une source de fluide sous pression, un équipage mobile (13) monté coulissant dans le corps (1) et soumis de manière antagoniste à la pression régnant dans chacune des chambres (7,9), et un détecteur (20,21,22) d'au moins une position témoin de l'équipage mobile (13) significative d'un seuil déterminé de différence de pression, le détecteur de position (20,21,22) émettant un signal en réponse à cette détection, **caractérisé en ce que** l'équipage mobile (13) est soumis à l'action d'un ressort (16) rappelant l'équipage mobile vers une butée et exerçant sur l'équipage mobile (13) un effort de rappel croissant jusqu'à une flèche critique et décroissant de la flèche critique jusqu'à une flèche maximale, la position témoin correspondant à la flèche maximale du ressort, le détecteur de position comportant un aimant permanent (20) porté par l'équipage mobile (13) à l'une de ses extrémités et une cellule inductive (21) sensible au champ magnétique de l'aimant permanent (20) portée de manière fixe par le corps (1) en regard de l'aimant permanent (12) et délivrant un signal de type logique pouvant prendre deux valeurs distinctes (V1,V2).

2. Détecteur de pression selon la revendication 1, **caractérisé en ce que** le détecteur de position comporte en outre un contre-aimant (22) monté fixe sur le corps en opposition de l'aimant permanent (20) de l'équipage mobile (13).

3. Détecteur de pression selon la revendication 1 ou la revendication 2, **caractérisé en ce que** le ressort (16) est réalisé dans un matériau ayant un module d'élasticité peu sensible à une variation de température.

## Claims

1. A pressure detector comprising a body (1) defining two chambers (7, 9) that are sealed relative to each other, and each of which is suitable for being connected to a source of fluid under pressure, moving equipment (13) slidably mounted in the body (1) and subjected in opposition to the pressures that exist in each of the chambers (7, 9), and a detector (20, 21, 22) of at least one reference position of the moving equipment (13) representative of a determined pressure difference threshold, the position detector (20, 21, 22) issuing a signal in response to said detection, the pressure detector being **characterized in that** the moving equipment (13) is subjected to the action of a spring (16) urging the moving equipment towards an abutment and exerting on the moving equipment (13) a return force that increases up to a critical deflection and decreases from the critical deflection to a maximum deflection, the reference position corresponding to the maximum deflection of the spring, the position detector including a permanent magnet (20) carried by the moving equipment (13) at one of its ends and an induction cell (21) responsive to the magnetic field of the permanent magnet (20) carried in stationary manner by the body (1) to face the permanent magnet (12) and delivering a logic type signal capable of taking two distinct values (V1, V2).

2. A pressure detector according to claim 1, **characterized in that** the position detector also includes an opposing magnet (22) mounted stationary on the body and opposing the permanent magnet (20) of the moving equipment (13).

3. A pressure detector according to claim 1 or claim 2, **characterized in that** the spring (16) is made of a material having a modulus of elasticity that presents little sensitivity to temperature variation.

## Patentansprüche

1. Druckdetektor, umfassend ein Gehäuse (1), das zwei Kammern (7, 9) begrenzt, die zueinander abgedichtet und dazu geeignet sind, jeweils mit einer Druckfluidquelle verbunden zu werden, ein bewegliches Organ (13), das verschiebbar in dem Gehäuse (1) gelagert und auf antagonistische Weise dem Druck ausgesetzt ist, der in jeder der Kammern (7, 9) herrscht, sowie einen Detektor (20, 21, 22) zum Erfassen mindestens einer Referenzposition des beweglichen Organs (13), die kennzeichnend für einen vorgegebenen Schwellenwert eines Druckunterschieds ist, wobei der Positionsdetektor (20, 21, 22) ein Signal in Antwort auf dieses Erfassen abgibt, **dadurch gekennzeichnet, dass** das bewegliche Organ (13) der Wirkung einer Feder (16) ausgesetzt ist, die das bewegliche Organ in Richtung eines Anschlags rückstellt und auf das bewegliche Organ (13) eine Rückstellkraft ausübt, die bis zu einer kritischen Auslenkung zunimmt und ab der kritischen Auslenkung bis zu einer maximalen Auslenkung abnimmt, wobei die Referenzposition der maximalen Auslenkung der Feder entspricht, wobei der Positionsdetektor einen Dauermagneten (20) umfasst, der von dem beweglichen Organ (13) an einem seiner Enden gehalten wird, sowie eine auf das Magnetfeld des Dauermagneten (20) ansprechende induktive Zelle (21), die fest von dem Gehäuse (1) gegenüber dem Dauermagneten (12) gehalten ist und ein Logiksignal liefert, das zwei unterschiedliche Werte (V1, V2) annehmen kann.

2. Druckdetektor nach Anspruch 1, **dadurch gekennzeichnet, dass** der Positionsdetektor ferner einen Gegenmagneten (22) umfasst, der fest an dem Gehäuse gegenüber dem Dauermagneten (20) des beweglichen Organs (13) montiert ist.

3. Druckdetektor nach Anspruch 1 oder Anspruch 2, **dadurch gekennzeichnet, dass** die Feder (16) aus einem Material mit einem Elastizitätsmodul hergestellt ist, das auf eine Temperaturänderung wenig empfindlich reagiert.
